# EUROPEAN PATENT APPLICATION

(11) **EP 4 693 658 A1**
(43) Date of publication of application: **11.02.2026**
(21) Application number: 23929507.4
(22) Date of filing: 31.03.2023
(51) Int. Cl.: H01M 50/244

(54) **BATTERY MODULE AND ELECTRICAL DEVICE**

(71) Applicant: Xiamen Ampack Technology Limited, Xiamen City, Fujian Province, 361000 (CN)
(72) Inventor: NONG, Wenbin, Xiamen, Fujian 361000 (CN); LI, Kunlong, Xiamen, Fujian 361000 (CN); WANG, Pengfei, Xiamen, Fujian 361000 (CN)
(74) Representative: Icosa
(86) International application number: PCT/CN2023/085761
(87) International publication number: WO 2024/197924

(57) **Abstract**

This application discloses a battery module and an electrical device. The battery module includes a first member, a second member, and a plurality of cell units arranged along a first direction. Each of the cell units includes a cell and a bracket. The cell includes a cell housing, an electrode assembly disposed in the cell housing, and an electrode terminal. The cell housing includes a body portion and a first sealing portion. The electrode terminal extends out of the cell housing from the first sealing portion. The body portions of adjacent cells are in direct contact. The cell housing includes a first wall, a second wall, a third wall, and a fourth wall. The first wall and the second wall are disposed opposite to each other along a second direction. The third wall and the fourth wall are disposed opposite to each other along the first direction. The bracket includes a first portion. The first portion covers at least a part of the first wall. When viewed along the second direction, in the first direction, the first portion does not exceed the third wall, and does not exceed the fourth wall. The first member and the second member are configured to restrict the cells from moving away from each other. The above battery module can increase the energy density of the battery module.

## Description

### TECHNICAL FIELD

This application relates to the field of energy storage technologies, and in particular, to a battery module and an electrical device.

### BACKGROUND

A battery module increases service life through a pressurized design, but currently, elastic objects such as foam are usually filled between adjacent cells to achieve pressurization between the cells. The added elastic objects occupy space, increase costs, and reduce the energy density of the battery module.

### SUMMARY

In view of this, it is necessary to provide a battery module and an electrical device, which can increase the energy density.

An embodiment of this application provides a battery module, where the battery module includes a first member, a second member, and a plurality of cell units arranged along a first direction. Each of the cell units includes a cell and a bracket. The cell includes an electrode assembly, a cell housing, and an electrode terminal. The electrode assembly is disposed in the cell housing. The electrode terminal is connected to the electrode assembly and led out of the cell housing. The cell housing includes a body portion and a first sealing portion. The electrode terminal extends out of the cell housing from the first sealing portion. The body portions of adjacent cells are in direct contact. The cell housing includes a first wall, a second wall, a third wall, and a fourth wall. The first wall and the second wall are disposed opposite to each other along a second direction. Along the first direction, the third wall is opposite the fourth wall. The bracket includes a first portion. The first portion covers at least a part of the first wall. When viewed along the second direction, in the first direction, the first portion does not exceed the third wall, and the first portion does not exceed the fourth wall. Along the first direction, the first member and the second member are located on two sides of the plurality of cell units. The first member is configured to restrict the cells from moving away from each other, and the second member is configured to restrict the cells from moving away from each other.

In the above battery module, by having the first portion not exceeding the third wall and not exceeding the fourth wall in the first direction, the body portions of adjacent cells can be in direct contact, and adjacent cells apply pressure to each other through the body portions. By restricting the plurality of cell units from moving away from each other through the first member and the second member, the need for buffer members between adjacent cells to provide a swelling space for the cells is reduced, reducing the occupied space, and thus increasing the energy density of the battery module.

Optionally, in some embodiments of this application, when viewed along the second direction, in the first direction, the first portion is located between the third wall and the fourth wall, and adjacent brackets are spaced apart. When the body portions of adjacent cells apply pressure to each other, the force on the first sealing portion can be reduced, enhancing the protection of the first sealing portion.

Optionally, in some embodiments of this application, the body portion of each cell is in a pressurized state, which is conducive to improving the service life of the cell.

Optionally, in some embodiments of this application, the cell unit includes two brackets. The cell housing includes two first sealing portions. The electrode terminal extends out of the cell housing from each of the two first sealing portions. Each of the first sealing portions is covered with the bracket, which can protect the first sealing portion.

Optionally, in some embodiments of this application, the second member is configured to apply pressure to the plurality of cell units and is configured to provide a swelling space for the plurality of cell units.

Optionally, in some embodiments of this application, the battery module includes a casing. The cell assemblies are disposed in the casing. The second member includes a base portion and a bent portion, the base portion being connected to the bent portion, and the bent portion being fixed to the housing. The base portion is configured to apply pressure to the cell units, and the bent portion is configured to provide a swelling space for the cell units, which can buffer the pressure applied to the cell units, and reduce the impact on the service life of the battery module. By continuously applying pressure to the cell units through the base portion, the cell units are in a pressurized state and maintain a dynamic balance, which is conducive to improving the service life of the battery module.

Optionally, in some embodiments of this application, the bent portion includes a first bent portion and a second bent portion arranged along a third direction. The first bent portion is connected to one side of the base portion, and the second bent portion is connected to another side of the base portion. The first bent portion and the second bent portion can provide a swelling space for the cell units.

Optionally, in some embodiments of this application, the second member includes a first connection section. The first connection section is connected a side of the first bent portion, the side of the first bent portion being a side facing away from the base portion, and the first connection section is fixed to the casing, which can transfer the force received by the bent portion to the casing.

Optionally, in some embodiments of this application, the first connection section is parallel to the base portion, which is conducive to deformation of the first connection section in the first direction.

Optionally, in some embodiments of this application, the first bent portion includes a first bent section and a second bent section. The first bent section connects the base portion and the second bent section, and the second bent section is connected to the first connection section.

Optionally, in some embodiments of this application, the first bent section and the base portion form a first included angle A₁, the second bent section and the first connection section form a second included angle B₁, and A₁ ≥ B₁, which is conducive to increasing the deformation resistance of the first bent section and reducing the risk of deformation of the second member in the first direction.

Optionally, in some embodiments of this application, the first bent section and the second bent section form a third included angle C₁, and C₁ > A₁, which is conducive to improving uniform deformation of the first bent portion.

Optionally, in some embodiments of this application, C₁ = 2A₁ = 2B₁, which is conducive to further improving uniform deformation of the first bent portion.

Optionally, in some embodiments of this application, the second member includes a second connection section. The second connection section connects a side of the second bent portion, the side of the second bent portion being a side facing away from the base portion. The second connection section is fixed to the casing, which can transfer the force received by the bent portion to the casing.

Optionally, in some embodiments of this application, the second connection section is parallel to the base portion, which is conducive to deformation of the second member in the first direction.

Optionally, in some embodiments of this application, the first bent portion and the second bent portion have the same structure, which is conducive to uniformity of stress and deformation.

Optionally, in some embodiments of this application, the casing includes a first sidewall, a second sidewall, a top wall, and a bottom wall. The first sidewall connects the top wall and the bottom wall, and the second sidewall connects the top wall and the bottom wall. The first member, the casing, and the second member form an accommodation space, and the cell units are disposed in the accommodation space.

Optionally, in some embodiments of this application, the battery module includes a front wall. The casing includes a first sidewall, a second sidewall, a top wall, and a bottom wall. The front wall connects the first sidewall, the second sidewall, the top wall, and the bottom wall. The first member and the front wall are disposed along the first direction. The first member, the front wall, and the casing form an accommodation space. Along the first direction, the second member is located between the plurality of cell units and the front wall, and the second member is located in the accommodation space.

Optionally, in some embodiments of this application, the first sealing portion includes a first connection portion, a second connection portion, and a third connection portion. The second connection portion and the third connection portion are disposed opposite to each other along a third direction. The second connection portion is connected to the third connection portion through the first connection portion. The bracket covers the second connection portion, the third connection portion, and at least a part of the first connection portion, which can protect the first sealing portion.

Optionally, in some embodiments of this application, the bracket includes a second portion, a first side portion, and a second side portion. The second portion covers at least a part of the first connection portion. The first side portion covers the second connection portion. The second side portion covers the third connection portion, which can protect the first sealing portion.

Optionally, in some embodiments of this application, when viewed along the second direction, in the first direction, the second portion is located between the third wall and the fourth wall. When the body portions of adjacent cells apply pressure to each other, the force on the first sealing portion can be reduced, enhancing the protection of the first sealing portion.

Optionally, in some embodiments of this application, when viewed along the second direction, in the first direction, the first side portion is located between the third wall and the fourth wall. When the body portions of adjacent cells apply pressure to each other, the force on the first sealing portion can be reduced, enhancing the protection of the first sealing portion.

Optionally, in some embodiments of this application, when viewed along the second direction, in the first direction, the second side portion is located between the third wall and the fourth wall. When the body portions of adjacent cells apply pressure to each other, the force on the first sealing portion can be reduced, enhancing the protection of the first sealing portion.

Optionally, in some embodiments of this application, when viewed along the first direction, in the second direction, a part of the first connection portion is located between the body portion and the first portion, and in the third direction, a part of the first connection portion is located between the first side portion and the second side portion. By covering a part of the first sealing portion with the bracket, the protection of the first sealing portion is enhanced. By disposing a part of the first connection portion between the body portion and the first portion and between the first side portion and the second side portion, a swelling space can be provided for the first connection portion, which is conducive to pressure relief, reduces the impact of the pressure inside the cell on the first connection portion, reduces the impact on the sealing performance of the first sealing portion, and facilitates heat dissipation of the first sealing portion.

Optionally, in some embodiments of this application, the electrode assembly is a wound structure; the electrode assembly includes a first straight section, a second straight section, a first curved section, and a second curved section. The first straight section connects the first curved section and the second curved section. The second straight section connects the first curved section and the second curved section. Along the first direction, a projection of the third wall covers a projection of the first straight section, and a projection of the fourth wall covers a projection of the second straight section, which is conducive to evenly applying pressure between the cells, further improving the service life of the cells.

Optionally, in some embodiments of this application, along the second direction, a projection of the first side portion overlaps with a projection of the first curved section, the projection of the first side portion and a projection of the first straight section are spaced apart from each other, and the projection of the first side portion and a projection of the second straight section are spaced apart from each other, which is conducive to pressure relief of the cell.

Optionally, in some embodiments of this application, along the second direction, a projection of the second side portion overlaps with a projection of the second curved section, the projection of the second side portion and a projection of the first straight section are spaced apart from each other, and the projection of the second side portion and a projection of the second straight section are spaced apart from each other, which is conducive to pressure relief of the cell.

Optionally, in some embodiments of this application, a second gap is formed between adjacent ones of the first side portions, which can reduce the force on the first side portion, thereby reducing the force on the first sealing portion, which is conducive to protecting the first sealing portion. The second gap also facilitates heat dissipation of the cell.

Optionally, in some embodiments of this application, a third gap is formed between adjacent ones of the second side portions, which can reduce the force on the second side portion, thereby further reducing the force on the first sealing portion, which is conducive to protecting the first sealing portion. The third gap also facilitates heat dissipation of the cell.

Optionally, in some embodiments of this application, the bracket includes a first extension portion. Along the second direction, the first extension portion extends from the first side portion. The body portion includes a fifth wall. The first extension portion covers at least a part of the fifth wall, which can protect a part of the body portion and a part of the second sealing portion, enhancing the connection strength between the bracket and the cell.

Optionally, in some embodiments of this application, the bracket includes a third recess and a first protrusion. The first protrusion is disposed in the third recess of an adjacent bracket. Along the first direction, a fourth gap is provided between the first protrusion and the third recess, which can reduce the stress on the bracket, enhance the protection of the first sealing portion, and enhance the connection strength between the bracket and the cell.

Optionally, in some embodiments of this application, the second extension portion is provided with a fourth recess and a second protrusion. The second protrusion is disposed in the fourth recess of an adjacent bracket, and a fifth gap is provided between the second protrusion and the fourth recess. By positioning adjacent brackets through the fourth recess and the second protrusion, displacement of adjacent body portions is further reduced, facilitating the application of pressure between a plurality of body portions. The fifth gap can reduce the stress on the bracket, further enhance the protection of the first sealing portion, and further enhance the connection strength between the bracket and the cell.

Optionally, in some embodiments of this application, the bracket is integrally formed on the cell, which is conducive to enhancing the connection strength between the bracket and the cell.

Optionally, in some embodiments of this application, the bracket is an insulating bracket, which can reduce the risk of a short circuit with the cell.

Optionally, in some embodiments of this application, the casing includes a first limiting portion and a second limiting portion. Along the second direction, the bracket is located between the first limiting portion and the second limiting portion. The first limiting portion and the second limiting portion can restrict the movement of the bracket along the second direction, which is conducive to the movement of the bracket along the first direction.

Optionally, in some embodiments of this application, the casing includes a third limiting portion and a fourth limiting portion. Along the second direction, the bracket is located between the third limiting portion and the fourth limiting portion. The third limiting portion and the fourth limiting portion can restrict the movement of the bracket along the second direction, which is conducive to the movement of the bracket along the first direction.

An embodiment of this application further provides an electrical device, where the electrical device includes the battery module according to any one of the foregoing embodiments.

In the above battery module and electrical device, by having the first portion not exceeding the third wall and not exceeding the fourth wall in the first direction, the body portions of adjacent cells can be in direct contact, and adjacent cells apply pressure to each other through the body portions. By restricting the plurality of cell units from moving away from each other through the first member and the second member, the need for buffer members between adjacent cells to provide a swelling space for the cells is reduced, reducing the occupied space, and thus increasing the energy density of the battery module.

### BRIEF DESCRIPTION OF DRAWINGS

FIG. 1 is a schematic exploded view of a battery module according to some embodiments.
FIG. 2 is a schematic partial structural diagram of a battery module according to some embodiments.
FIG. 3 is a schematic structural diagram of a cell unit according to some embodiments.
FIG. 4 is a schematic structural diagram of a cell unit from another perspective according to some embodiments.
FIG. 5 is a schematic partial enlarged view of a cell unit according to some embodiments.
FIG. 6 is a schematic structural diagram of a cell according to some embodiments.
FIG. 7 is a schematic structural diagram of a cell viewed along a second direction Y according to some embodiments.
FIG. 8 is a schematic exploded view of a cell according to some embodiments.
FIG. 9 is a schematic structural diagram of a cell according to some other embodiments.
FIG. 10 is a schematic structural diagram of a cell viewed along a second direction Y according to still some other embodiments.
FIG. 11 is a schematic structural diagram of a cell from another perspective according to still some other embodiments.
FIG. 12 is a schematic structural diagram of an electrode assembly according to some embodiments.
FIG. 13 is a schematic structural diagram of a cell and a bracket according to some embodiments.
FIG. 14 is a schematic structural diagram of a cell and a bracket from another perspective according to some embodiments.
FIG. 15 is a schematic structural diagram of a cell and a bracket from still another perspective according to some embodiments.
FIG. 16 is a schematic structural diagram of a cell and a bracket from yet another perspective according to some embodiments.
FIG. 17 is a schematic cross-sectional view along II-II of FIG. 13.
FIG. 18 is a schematic partial structural diagram of a cell and a bracket according to FIG. 13.
FIG. 19 is another schematic partial structural diagram of a cell and a bracket according to FIG. 13.
FIG. 20 is a schematic partial structural diagram of a casing according to some embodiments.
FIG. 21 is a schematic structural diagram of a second member according to some embodiments.
FIG. 22 is a schematic structural diagram of an electrical device according to some embodiments.

Reference signs of main components:

| | |
|---|---|
| Battery module | 100 |
| Cell unit | 10. |
| Cell | 11 |
| Cell housing | 11a |
| Body portion | 111 |
| First wall | 111a |
| Second wall | 111b |
| Third wall | 111c |
| Fourth wall | 111d |
| Fifth wall | 111e |
| Sixth wall | 111f |
| First housing | 1111 |
| First recess | 1111a |
| Second housing | 1112 |
| Second recess | 1112a |
| First extension side | 1113 |
| Second extension side | 1114 |
| First sealing portion | 112 |
| First connection portion | 112a |
| Second connection portion | 112b |
| Third connection portion | 112c |
| Second sealing portion | 113 |
| Electrode assembly | 11b |
| First straight section | 1116 |
| Second straight section | 1117 |
| First curved section | 1118 |
| Second curved section | 1119 |
| Electrode terminal | 11c |
| Bracket | 12 |
| First gap | 12a |
| Fourth gap | 12b |
| Fifth gap | 12c |
| First portion | 121 |
| Second portion | 122 |
| First side portion | 123 |
| Second gap | 123a |
| Second side portion | 124 |
| Third gap | 124a |
| First extension portion | 125 |
| Third recess | 1251 |
| First protrusion | 1252 |
| Second extension portion | 126 |
| Fourth recess | 1261 |
| Second protrusion | 1262 |
| Third portion | 127 |
| First elastic member | 101 |
| Second elastic member | 102 |
| First member | 20 |
| Second member | 30 |
| Base portion | 31 |
| Bent portion | 32 |
| First bent portion | 321 |
| First bent section | 321a |
| Second bent section | 321b |
| Second bent portion | 322 |
| Third bent section | 322a |
| Fourth bent section | 322b |
| First connection section | 323 |
| Second connection section | 324 |
| Casing | 40 |
| First sidewall | 41 |
| First fixed portion | 411 |
| Second sidewall | 42 |
| Second fixed portion | 421 |
| Top wall | 43 |
| Bottom wall | 44 |
| Third fixed portion | 443 |
| Front wall | 45 |
| First limiting portion | 441 |
| Second limiting portion | 442 |
| Third limiting portion | 431 |
| Fourth limiting portion | 432 |
| Sampling wire | 50 |
| Circuit board | 60 |
| Electrical device | 200 |
| First direction | X |
| Second direction | Y |
| Third direction | Z |

Some following specific embodiments will further illustrate this application with reference to the above drawings.

### DESCRIPTION OF EMBODIMENTS

Some following specific embodiments are exemplary and not restrictive, aiming to provide a basic understanding of this application but not to confirm critical or decisive elements of this application and not to limit the scope of protection. As long as there is no structural conflict, the various technical features mentioned in various embodiments can be combined in any manner.

When one component is assumed as being "disposed at/on/in" another component, the component may be provided directly at/on/in the another component or with a component possibly present therebetween. When one component is assumed as being "connected to" another component, it may be connected to the another component directly or with a component possibly present therebetween.

It should be understood that the terms "perpendicular" and "equal to" are used for describing an ideal state of two components. During actual production or use, an approximately perpendicular or equal state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The term "parallel" is used for describing an ideal state of two components. During actual production or use, an approximately parallel state may be present between the two components. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of" in the specification specifically indicates that there are two or more components when used for describing the number of components.

In a first direction X, a first direction X and a direction opposite to the first direction X are present. In a second direction Y, a second direction Y and a direction opposite to the second direction Y are present. In a third direction Z, a third direction Z and a direction opposite to the third direction Z are present.

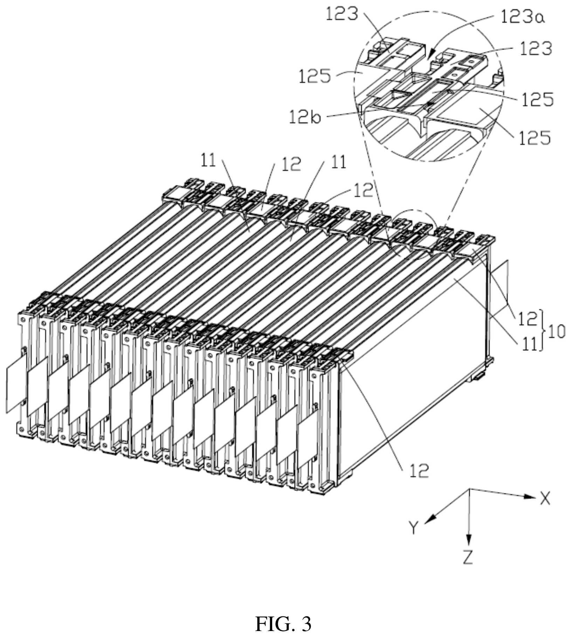

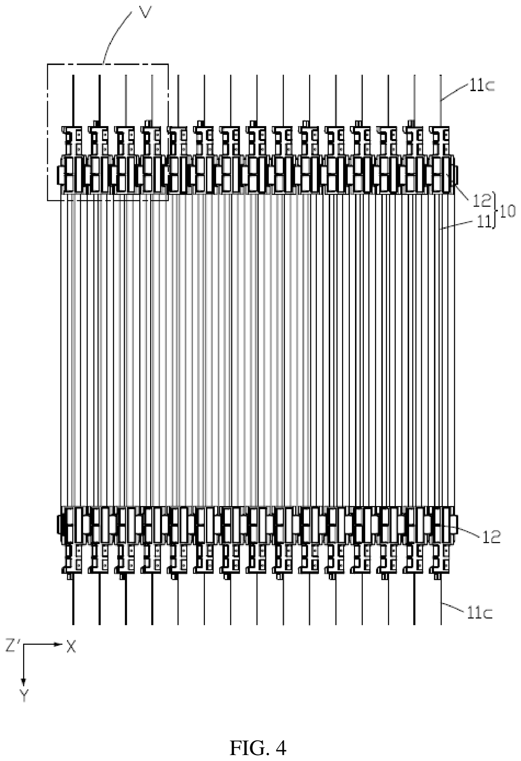

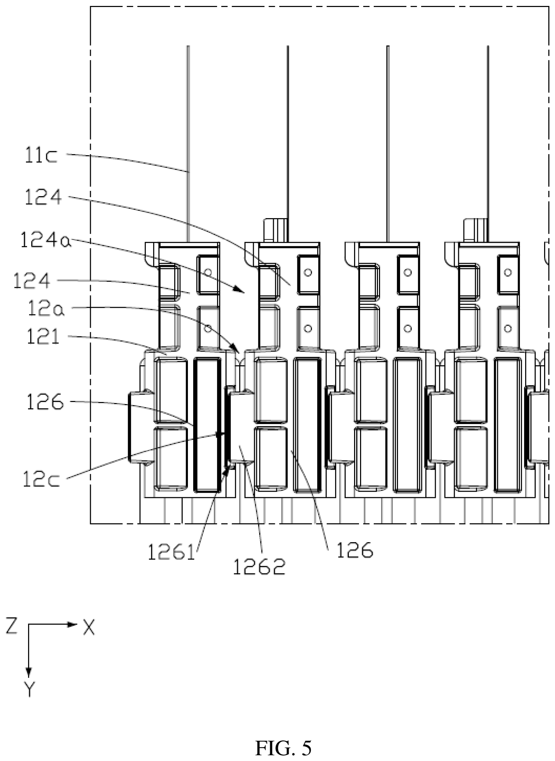

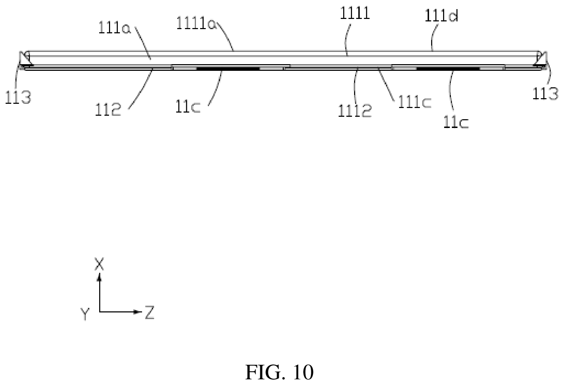

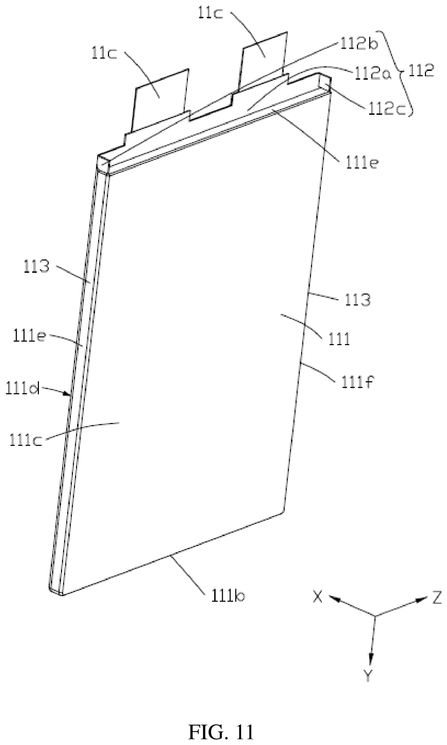

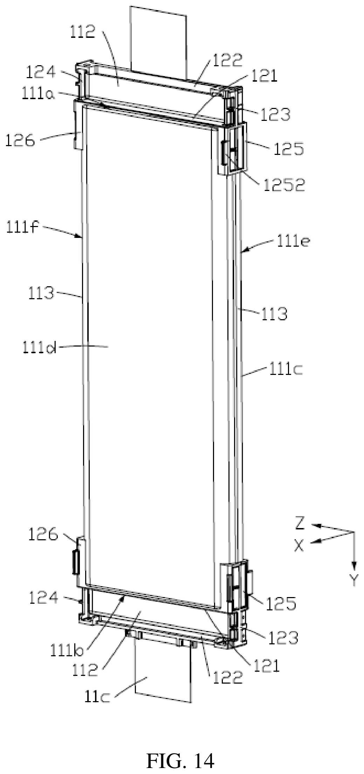

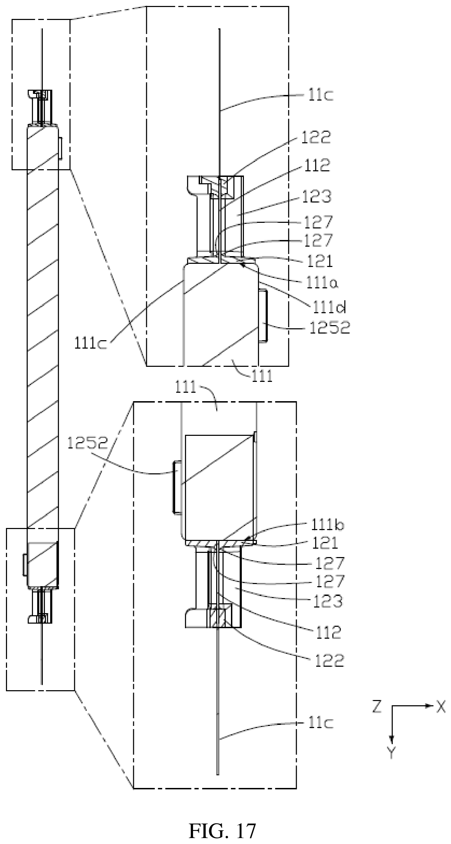

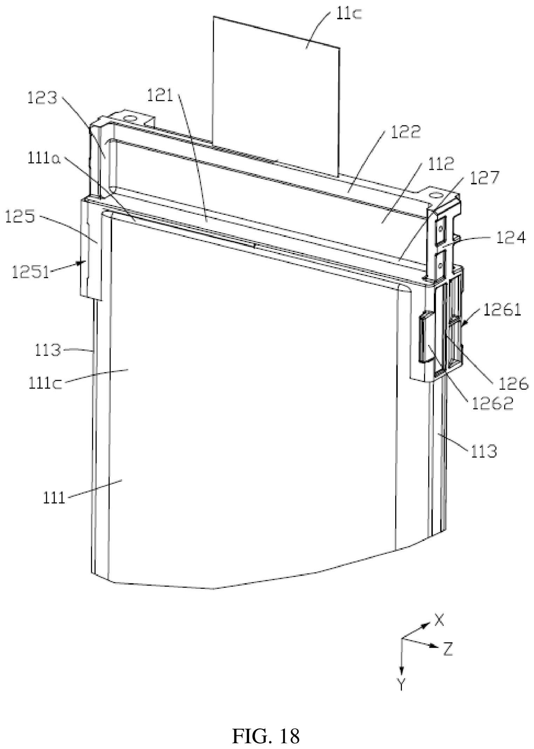

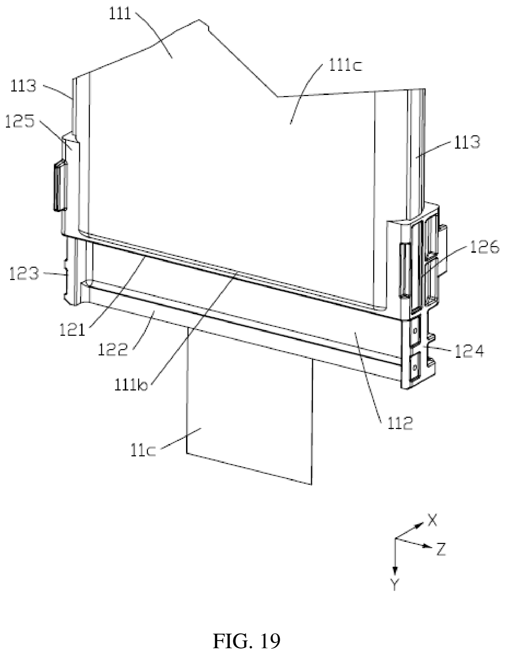

For ease of description, in FIG. 3 to FIG. 11 and FIG. 13 to FIG. 19, the electrode terminal 11c is not bent.

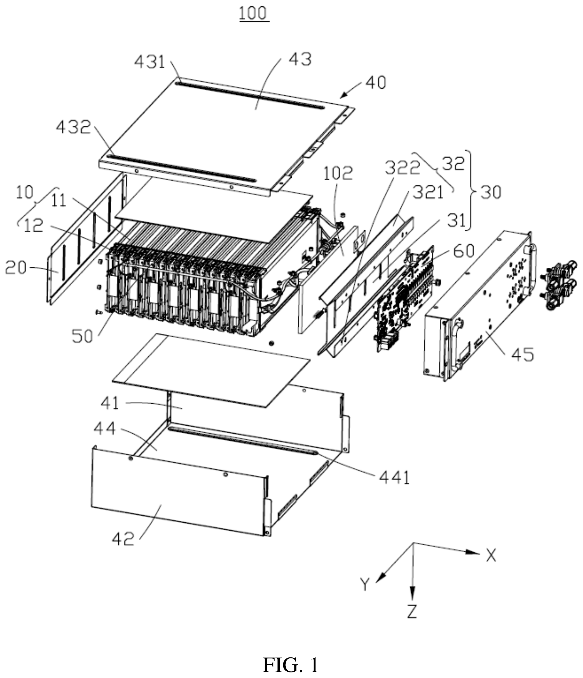

Referring to FIG. 1 to FIG. 6, FIG. 13, and FIG. 14, an embodiment of this application provides a battery module 100. The battery module includes a plurality of cell units 10 arranged along a first direction X, a first member 20, and a second member 30. Each of the cell units 10 includes a cell 11 and a bracket 12, the bracket 12 being connected to the cell 11. The cell 11 includes a cell housing 11a, an electrode assembly 11b, and an electrode terminal 11c, the electrode terminal 11c being connected to the electrode assembly 11b and led out of the cell housing 11a. The cell housing 11a includes a body portion 111 and a first sealing portion 112, the first sealing portion extending from the body portion 111. The electrode assembly 11b is disposed in the body portion 111, and the electrode terminal 11c extends out of the cell housing 11a from the first sealing portion 112. The body portions 111 of adjacent cells 11 are in direct contact, and the electrode terminals 11c of two adjacent cells 11 are bent and connected.

The body portion 111 includes a first wall 111a, a second wall 111b, a third wall 111c, and a fourth wall 111d. Along a second direction Y, the first wall 111a and the second wall 111b are disposed opposite to each other. Along the first direction X, the third wall 111c and the fourth wall 111d are disposed opposite to each other. The second direction Y is perpendicular to the first direction X.

The bracket 12 includes a first portion 121, the first portion 121 covering at least a part of the first wall 111a. When viewed along the second direction Y, in the first direction X, the first portion 121 does not exceed the third wall 111c, and the first portion 121 does not exceed the fourth wall 111d.

Along the first direction X, the first member 20 and the second member 30 are located on two sides of the cell units 10. The first member 20 is configured to restrict the cells 11 from moving away from each other, and the second member 30 is configured to restrict the cells 11 from moving away from each other.

In the above battery module 100, by having the first portion 121 not exceeding the third wall 111c and not exceeding the fourth wall 111d in the first direction X, the body portions 111 of adjacent cells 11 may be in direct contact, and adjacent cells 11 apply pressure to each other through the body portions 111. By restricting the plurality of cell units 10 from moving away from each other through the first member 20 and the second member 30, the need for buffer members between adjacent cells 11 to provide a swelling space for the cells 11 is reduced, reducing the occupied space, and thus increasing the energy density of the battery module 100.

In some embodiments, the bracket 12 is integrally formed on the cell 11, which is conducive to enhancing the connection strength between the bracket 12 and the cell 11. Optionally, the bracket 12 is integrally formed with the cell 11 through low-pressure injection molding.

In some embodiments, the bracket 12 is an insulating bracket, which can reduce the risk of a short circuit with the cell 11.

In some embodiments, an outer surface of the body portion 111 includes some insulating members such as an insulating film to better protect the body portion.

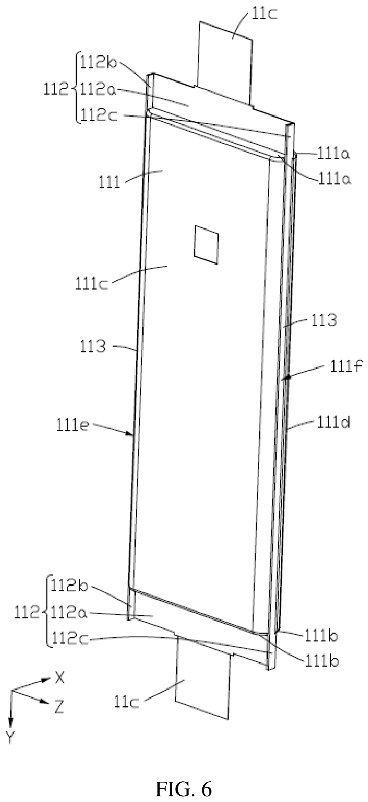

Referring to FIG. 6 to FIG. 8, in some embodiments, the body portion 111 is provided with an accommodation space, and the body portion 111 includes a first housing 1111 and a second housing 1112. The first housing 1111 is provided with a first recess 1111a, and the second housing 1112 is provided with a second recess 1112a. The first housing 1111 is connected to the second housing 1112 to form the accommodation space. A part of the electrode assembly 11b is disposed in the first recess 1111a, and a part of the electrode assembly 11b is disposed in the second recess 1112a. A peripheral side of the first housing 1111 extends outward to form a first extension side 1113, and a peripheral side of the second housing 1112 extends outward to form a second extension side 1114. After the first housing 1111 is connected to the second housing 1112, the first extension side 1113 and the second extension side 1114 overlap and are sealed and connected.

In some embodiments, the first extension side 1113 and the second extension side 1114 overlap and are sealed and connected to form two first sealing portions 112 and two second sealing portions 113. The two first sealing portions 112 are disposed in a second direction Y. The two second sealing portions 113 are disposed along a third direction Z. One of the first sealing portions 112 connects the two second sealing portions 113, and the other first sealing portion 112 connects the two second sealing portions 113. One of the first sealing portions 112 is connected to the first wall 111a, and the other first sealing portion 112 is connected to the second wall 111b. The body portion 111 includes a fifth wall 111e and a sixth wall 111f, the fifth wall 111e and the sixth wall 111f being disposed opposite to each other along the third direction Z. One of the two second sealing portions 113 is disposed at the fifth wall 111e, and the other of the two second sealing portions 113 is disposed at the sixth wall 111f. The first direction X, the second direction Y, and the third direction Z are perpendicular to each other. In some embodiments, the cell 11 includes two electrode terminals 11c, where one of the electrode terminals 11c extends out of the cell housing 11a from one of the first sealing portions 112, and the other electrode terminal 11c extends out of the cell housing 11a from the other first sealing portion 112.

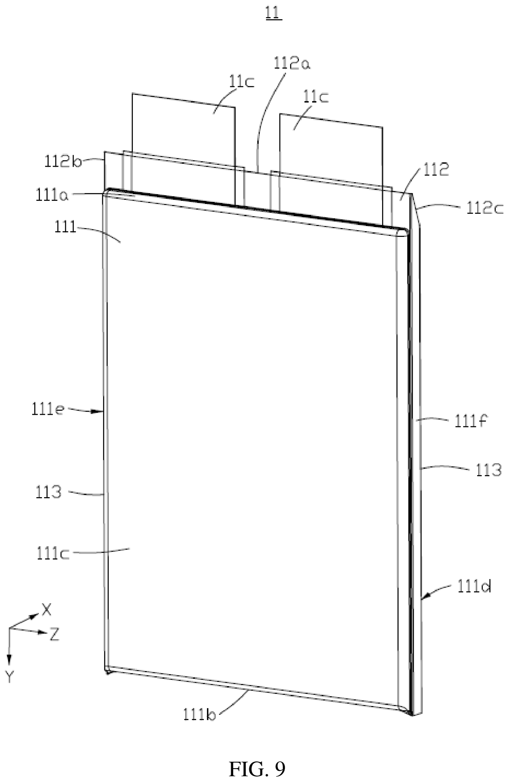

Referring to FIG. 9 to FIG. 11, in some embodiments, the cell 11 includes two electrode terminals 11c and one first sealing portion 112, the two electrode terminals 11c extending out of the cell housing 11a from the first sealing portion 112.

In some embodiments, the cell 11 includes two electrode terminals 11c and two first sealing portions 112, the two electrode terminals 11c extending out of the cell housing 11a from the same first sealing portion 112.

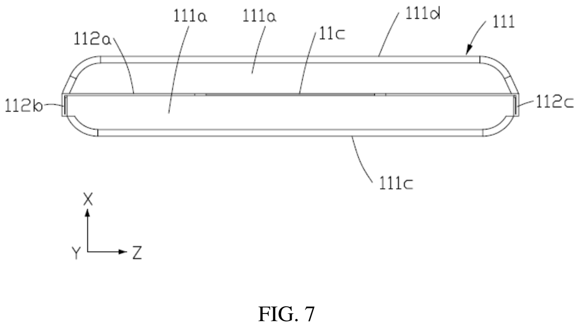

Referring to FIG. 6 and FIG. 7, in some embodiments, the body portion 111 includes two first walls 111a, two second walls 111b, and two first sealing portions 112. One of the first walls 111a connects the third wall 111c and one of the first sealing portions 112, and the other first wall 111a connects the fourth wall 111d and the one first sealing portion 112. One of the second walls 111b connects the third wall 111c and the other first sealing portion 112, and the other second wall 111b connects the fourth wall 111d and the other first sealing portion 112. One of the electrode terminals 11c extends out of the cell housing 11a from one of the first sealing portions 112, and the other electrode terminal 11c extends out of the cell housing 11a from the other first sealing portion 112.

When viewed along the second direction Y, in the first direction X, the two first walls 111a are located on opposite sides of one of the first sealing portions 112. When viewed along a direction opposite to the second direction Y, in the first direction X, the two second walls 111b are located on opposite sides of the other first sealing portion 112.

In some embodiments, the body portion 111 includes one first wall 111a, one second wall 111b, and two first sealing portions 112. The first wall 111a connects the third wall 111c and one of the first sealing portions 112, and the second wall 111b connects the third wall 111c and the other first sealing portion 112. The body portion 111 is provided with an accommodation space, and the body portion 111 includes a first housing 1111 and a second housing 1112. The first housing 1111 is provided with a first recess 1111a, and the second housing 1112 is flat. The first housing 1111 is connected to the second housing 1112 to form the accommodation space. The electrode assembly 11b is disposed in the first recess 1111a. One of the electrode terminals 11c extends out of the cell housing 11a from one of the first sealing portions 112, and the other electrode terminal 11c extends out of the cell housing 11a from the other first sealing portion 112.

In some embodiments, the body portion 111 includes two first walls 111a, one second wall 111b, and one first sealing portion 112. The body portion 111 is provided with an accommodation space, and the body portion 111 includes a first housing 1111 and a second housing 1112. The first housing 1111 is connected to the second housing 1112. The first housing 1111 is provided with a first recess 1111a, and the second housing 1112 is provided with a second recess 1112a, forming the accommodation space. The electrode assembly 11b is disposed in the first recess 1111a and the second recess 1112a. The two electrode terminals 11c extend out of the cell housing 11a from the same first sealing portion 112.

Optionally, the second wall 111b has one, and the first sealing portion 112 has one. One of the first walls 111a connects the third wall 111c and the first sealing portion 112, and the other first wall 111a connects the fourth wall 111d and the first sealing portion 112. When viewed along the second direction Y, in the first direction X, the two first walls 111a are located on opposite sides of the first sealing portion 112.

Optionally, the second wall 111b has two, and the first sealing portion 112 has two. One of the first walls 111a connects the third wall 111c and one of the first sealing portions 112, and the other first wall 111a connects the fourth wall 111d and the one first sealing portion 112. When viewed along the second direction Y, in the first direction X, the two first walls 111a are located on opposite sides of one of the first sealing portions 112. One of the second walls 111b connects the third wall 111c and the other first sealing portion 112, and the other second wall 111b connects the fourth wall 111d and the other first sealing portion 112. When viewed along a direction opposite to the second direction Y, in the first direction X, the two second walls 111b are located on opposite sides of one of the first sealing portions 112.

In some embodiments, the body portion 111 includes one first wall 111a, one second wall 111b, and one first sealing portion 112. The body portion 111 is provided with an accommodation space, and the body portion 111 includes a first housing 1111 and a second housing 1112. The first housing 1111 is provided with a first recess 1111a, and the second housing 1112 is flat. The first housing 1111 is connected to the second housing 1112 to form the accommodation space. The electrode assembly 11b is disposed in the first recess 1111a. The two electrode terminals 11c extend out of the cell housing 11a from the same first sealing portion 112.

Optionally, the first sealing portion 112 has one. The first wall 111a connects the third wall 111c and the first sealing portion 112, and the second wall 111b is connected to the third wall 111c.

Optionally, the first sealing portion 112 has two. The first wall 111a connects the third wall 111c and one of the first sealing portions 112, and the second wall 111b connects the third wall 111c and the other first sealing portion 112.

Referring to FIG. 6, FIG. 7, FIG. 13, and FIG. 14, in some embodiments, the first sealing portion 112 includes a first connection portion 112a, a second connection portion 112b, and a third connection portion 112c. The second connection portion 112b and the third connection portion 112c are disposed opposite to each other along the third direction Z. The second connection portion 112b is connected to the third connection portion 112c through the first connection portion 112a. The electrode terminal 11c extends from the first connection portion 112a. The bracket 12 covers at least a part of the first connection portion 112a, the second connection portion 112b, and the third connection portion 112c, providing protection for the first sealing portion 112.

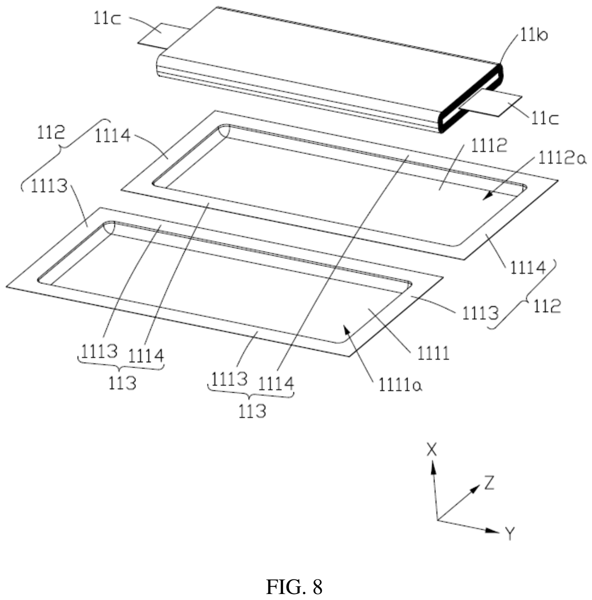

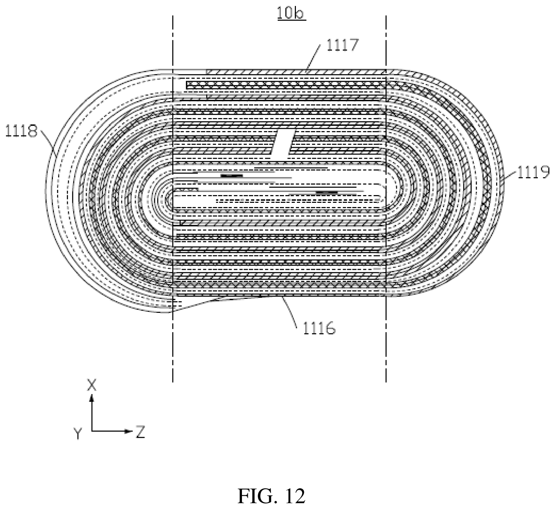

Referring to FIG. 8 and FIG. 12, in some embodiments, the electrode assembly 11b is a wound structure, and the electrode assembly 11b includes a first straight section 1116, a second straight section 1117, a first curved section 1118, and a second curved section 1119. The first straight section 1116 connects the first curved section 1118 and the second curved section 1119, and the second straight section 1117 connects the first curved section 1118 and the second curved section 1119. Along the first direction X, a projection of the third wall 111c overlaps with a projection of the first straight section 1116, a projection of the fourth wall 111d covers the projection of the first straight section 1116, the projection of the third wall 111c covers a projection of the second straight section 1117, and the projection of the fourth wall 111d covers the projection of the second straight section 1117, which is conducive to evenly applying pressure between the cells 11, further improving the service life of the cell 11.

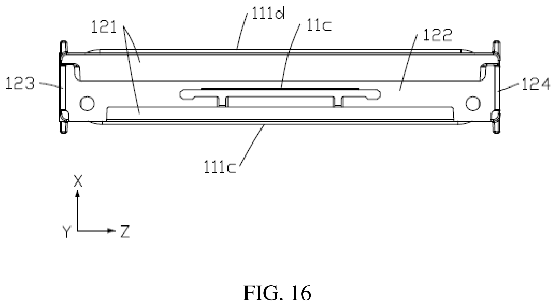

Referring to FIG. 16 to FIG. 19, in some embodiments, when viewed along the second direction Y, in the first direction X, the first portion 121 is located between the third wall 111c and the fourth wall 111d. A first gap 12a exists between the first portions 121 on adjacent cells 11. Through the first gap 12a, adjacent brackets 12 are spaced apart. When the body portions 111 of adjacent cells 11 apply pressure to each other, the force on the first sealing portion 112 can be reduced, enhancing the protection of the first sealing portion 112.

Referring to FIG. 12 to FIG. 19, in some embodiments, the bracket 12 includes a second portion 122, a first side portion 123, and a second side portion 124. The second portion 122 covers at least a part of the first connection portion 112a, the first side portion 123 covers the second connection portion 112b, and the second side portion 124 covers the third connection portion 112c. Optionally, the first portion 121 connects the first side portion 123 and the second side portion 124, and the second portion 122 connects the first side portion 123 and the second side portion 124, which can enhance the structural strength of the bracket 12. The electrode terminal 11c extends out of the second portion 122.

In some embodiments, along the second direction Y, a projection of the first side portion 123 overlaps with a projection of the first curved section 1118, the projection of the first side portion 123 and a projection of the first straight section 1116 spaced apart from each other, and the projection of the first side portion 123and a projection of the second straight section 1117 are spaced apart from each other, which is conducive to pressure relief of the cell 11.

In some embodiments, along the second direction Y, a projection of the second side portion 124 overlaps with a projection of the second curved section 1119, the projection of the second side portion 124 and a projection of the first straight section 1116 are spaced apart from each other, and the projection of the second side portion 124 and a projection of the second straight section 1117 are spaced apart from each other, which is conducive to pressure relief of the cell 11.

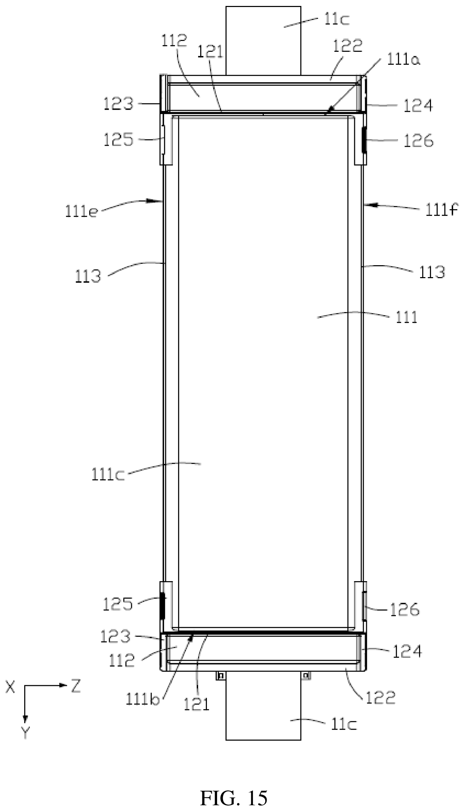

Referring to FIG. 15, in some embodiments, when viewed along the first direction X, in the second direction Y, a part of the first connection portion 112a is located between the body portion 111 and the first portion 121, and in the third direction Z, a part of the first connection portion 112a is located between the first side portion 123 and the second side portion 124. By covering a part of the first sealing portion 112 with the bracket 12, the protection of the first sealing portion 112 is enhanced. By disposing a part of the first connection portion 112a between the body portion 111 and the first portion 121 and between the first side portion 123 and the second side portion 124, a swelling space may be provided for the first connection portion 112a, which is conducive to pressure relief, reduces the impact of the pressure inside the cell 11 on the first connection portion 112a, reduces the impact on the sealing performance of the first sealing portion 112, and facilitates heat dissipation of the first sealing portion 112.

In an embodiment, the cell 11 includes an electrolyte, where the electrolyte is provided in the cell housing 11a. The electrode assembly 11b includes a first electrode plate, a separator, and a second electrode plate, and the electrode assembly is formed by winding or stacking the first electrode plate, the separator, and the second electrode plate. A part of the electrolyte infiltrates the first electrode plate, the separator, and the second electrode plate for transferring electrical ions, and a part of the electrolyte is attached to a surface of the cell housing 11a and/or a surface of the electrode assembly 11b in a free state, where the electrolyte in the free state is a free electrolyte. During the cycling process of a plurality of cells 11, the free electrolyte inside the cell 11 is squeezed.

In this application, by having a part of the first connection portion 112a located between the body portion 111 and the first portion 121 in the second direction Y, and a part of the first connection portion 112a located between the first side portion 123 and the second side portion 124 in the third direction Z, a swelling space is provided for the first sealing portion 112, reducing the impact of swelling of the cell 11 on the sealing performance of the first sealing portion 112.

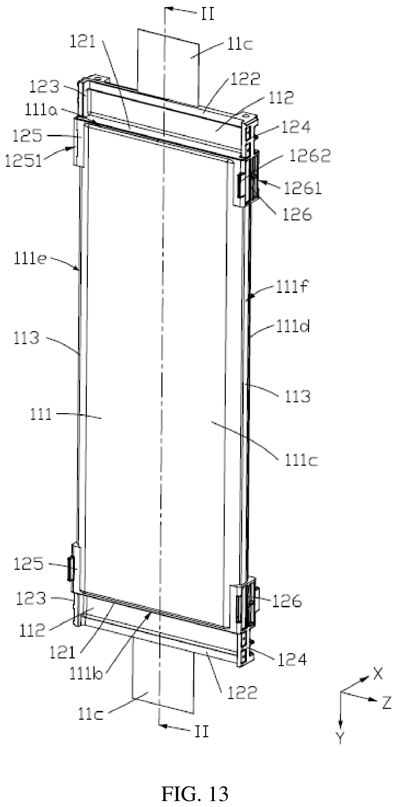

Referring to FIG. 13 to FIG. 19, in some embodiments, when viewed along the second direction Y, in the first direction X, the second portion 122 is located between the third wall 111c and the fourth wall 111d. When the body portions 111 of adjacent cells 11 apply pressure to each other, the force on the first sealing portion 112 can be reduced, enhancing the protection of the first sealing portion 112.

In some embodiments, when viewed along the second direction Y, in the first direction X, the first side portion 123 is located between the third wall 111c and the fourth wall 111d. When the body portions 111 of adjacent cells 11 apply pressure to each other, the force on the first sealing portion 112 can be reduced, enhancing the protection of the first sealing portion 112.

In some embodiments, when viewed along the second direction Y, in the first direction X, the second side portion 124 is located between the third wall 111c and the fourth wall 111d. When the body portions 111 of adjacent cells 11 apply pressure to each other, the force on the first sealing portion 112 can be reduced, enhancing the protection of the first sealing portion 112.

In some embodiments, the bracket 12 includes a first extension portion 125, the first extension portion 125 extending from the first side portion 123. The first extension portion 125 can protect the fifth wall 111e and the second sealing portion 113, enhancing the connection strength between the bracket 12 and the cell 11.

Optionally, in the second direction Y, the first extension portion 125 is provided on a part of the fifth wall 111e and a part of the second sealing portion 113, which can protect a part of the body portion 111 and a part of the second sealing portion 113, enhance the connection strength between the bracket 12 and the cell 11, and facilitate the integral formation of the bracket 12 on the cell 11.

Optionally, in the second direction Y, the first extension portion 125 is provided on the entire fifth wall 111e and the entire second sealing portion 113, which can better protect the body portion 111 and the second sealing portion 113 and better enhance the connection strength between the bracket 12 and the cell 11.

In some embodiments, when viewed along the second direction Y, in the first direction X, the first side portion 123 does not exceed the first extension portion 125, and a second gap 123a is formed between adjacent ones of the first side portions 123. When adjacent cell housings 11a are in direct contact and apply pressure to each other, the second gap 123a can reduce the force on the first side portion 123, thereby reducing the force on the first sealing portion 112, which is conducive to protecting the first sealing portion 112. The second gap 123a also facilitates heat dissipation of the cell 11.

In some embodiments, the bracket 12 includes a second extension portion 126, the second extension portion 126 extending from the second side portion 124. The second extension portion 126 can protect the sixth wall 111f and the second sealing portion 113, enhancing the connection strength between the bracket 12 and the cell 11, and facilitating injection molding of the second extension portion 126.

Optionally, in the second direction Y, the second extension portion 126 is provided on a part of the sixth wall 111f and a part of the second sealing portion 113, which can protect a part of the body portion 111 and a part of the second sealing portion 113, enhance the connection strength between the bracket 12 and the cell 11, and facilitate the integral formation of the bracket 12 on the cell 11.

Optionally, in the second direction Y, the second extension portion 126 is provided on the entire sixth wall 111f and the entire second sealing portion 113, which can better protect the body portion 111 and the second sealing portion 113 and better enhance the connection strength between the bracket 12 and the cell 11.

In some embodiments, when viewed along the second direction Y, in the first direction X, the second side portion 124 does not exceed the second extension portion 126, and a third gap 124a is formed between adjacent ones of the second side portions 124. When adjacent cell housings 11a are direct contact and apply pressure to each other, the third gap 124a can reduce the force on the second side portion 124, thereby further reducing the force on the first sealing portion 112, which is conducive to protecting the first sealing portion 112. The third gap 124a also facilitates heat dissipation of the cell 11.

In some embodiments, along the first direction X, the bracket 12 includes a third recess 1251 and a first protrusion 1252, the third recess 1251 being provided in the first extension portion 125, and the first protrusion 1252 extending from the first extension portion 125. When the body portions of adjacent cells 11 are in direct contact, the first protrusion 1252 is disposed in the third recess 1251 of an adjacent bracket 12, and a fourth gap 12b is provided between the first protrusion 1252 and the third recess 1251. By positioning adjacent brackets 12 through the third recess 1251 and the first protrusion 1252, displacement of adjacent body portions 111 is reduced, facilitating the application of pressure between a plurality of body portions 111. The fourth gap 12b can reduce the stress on the bracket 12, enhance the protection of the first sealing portion 112, and enhance the connection strength between the bracket 12 and the cell 11.

In some embodiments, along the first direction X, the bracket 12 includes a fourth recess 1261 and a second protrusion 1262, the fourth recess 1261 being provided in the second extension portion 126, and the second protrusion 1262 extending from the second extension portion 126. When the body portions of adjacent cells 11 are in direct contact, the second protrusion 1262 is disposed in the fourth recess 1261 of an adjacent bracket 12, and a fifth gap 12c is provided between the second protrusion 1262 and the fourth recess 1261. By further positioning adjacent brackets 12 through the fourth recess 1261 and the second protrusion 1262, displacement of adjacent body portions 111 is further reduced, further facilitating the application of pressure between a plurality of body portions 111. The fifth gap 12c can reduce the stress on the bracket 12, further enhance the protection of the first sealing portion 112, and further enhance the connection strength between the bracket 12 and the cell 11.

In some embodiments, the bracket 12 includes a third portion 127, the third portion 127 being connected to a side of the first portion 121 facing the second portion 122. The third portion 127 extends from the first portion 121 along a direction opposite to the second direction Y, and the third portion 127 covers a part of the first sealing portion 112. Through the third portion 127, the part of the first sealing portion 112 extending out of the first portion 121 can be supported and protected, reducing the risk of affecting the sealing performance of the cell 11 caused by damage to the first sealing portion 112.

In some embodiments, the cell unit 10 includes two brackets 12, where one of the brackets 12 is connected to a part of the first wall 111a, and the other bracket 12 is connected to a part of the second wall 111b. One of the electrode terminals 11c extends out of one first sealing portion 112 and the bracket 12 along the second direction Y, and the other electrode terminal 11c extends out of the other first sealing portion 112 and the bracket 12 along a direction opposite to the second direction Y.

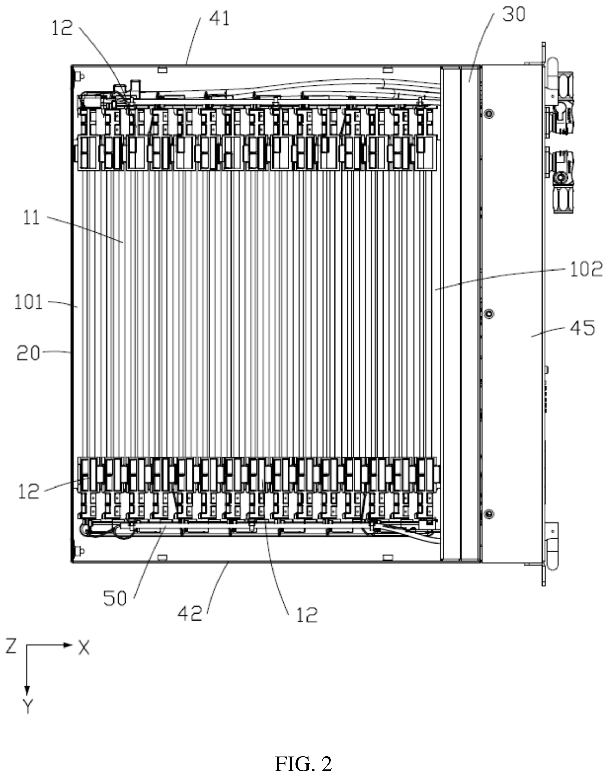

Referring to FIG. 1 and FIG. 2, in some embodiments, the plurality of cell units 10 arranged along the first direction X are in a pressurized state. Each body portion 111 is in a pressurized state.

In some embodiments, the battery module 100 includes a casing 40, and the casing 40 includes a first sidewall 41, a second sidewall 42, a top wall 43, and a bottom wall 44. The first sidewall 41 and the second sidewall 42 are arranged along the second direction Y, and the top wall 43 and the bottom wall 44 are arranged along the third direction Z. The first sidewall 41 connects the top wall 43 and the bottom wall 44, and the second sidewall 42 connects the top wall 43 and the bottom wall 44. The first member 20, the casing 40, and the second member 30 form an accommodation space, and the cell units 10 are disposed in the accommodation space. Along the first direction X, the plurality of cell units 10 are disposed between the first member 20 and the second member 30. The first member 20 and the second member 30 restrict the movement of the plurality of cell units 10. The first member 20 is connected to one of the two outermost cells 11, and the second member 30 is connected to the other outermost cell 11.

Optionally, the first member 20 connects the first sidewall 41 and the second sidewall 42, and the second member 30 connects the first sidewall 41, the second sidewall 42, and the bottom wall 44.

Optionally, the first member 20 connects the first sidewall 41, the second sidewall 42, the top wall 43, and the bottom wall 44, and the second member 30 connects the first sidewall 41, the second sidewall 42, the top wall 43, and the bottom wall 44.

Referring to FIG. 1, in some embodiments, the battery module 100 includes a casing 40 and a front wall 45, and the casing 40 includes a first sidewall 41, a second sidewall 42, a top wall 43, and a bottom wall 44. The first sidewall 41 and the second sidewall 42 are arranged along the second direction Y, and the top wall 43 and the bottom wall 44 are arranged along the third direction Z. The first sidewall 41 connects the top wall 43 and the bottom wall 44, and the second sidewall 42 connects the top wall 43 and the bottom wall 44. The front wall 45 connects the first sidewall 41, the second sidewall 42, the top wall 43, and the bottom wall 44. The first member 20 and the front wall 45 are disposed along the first direction X. The first member 20, the front wall 45, and the casing 40 form an accommodation space, and the second member 30 is located in the accommodation space. Along the first direction X, the second member 30 is located between the plurality of cell units 10 and the front wall 45. In some embodiments, a first elastic member 101 is provided between the first member 20 and the outermost cell 11. The first elastic member 101 can be compressed by the cell unit 10, providing a swelling space and pressure for the cell unit 10. Optionally, the first elastic member 101 includes foam.

In some embodiments, a second elastic member 102 is provided between the second member 30 and the other outermost cell 11. The second elastic member 102 can be compressed by the cell unit 10, further providing a swelling space and pressure for the cell unit 10. Optionally, the second elastic member 102 includes foam.

In some embodiments, the first member 20 and the second member 30 may be configured to have the same structure.

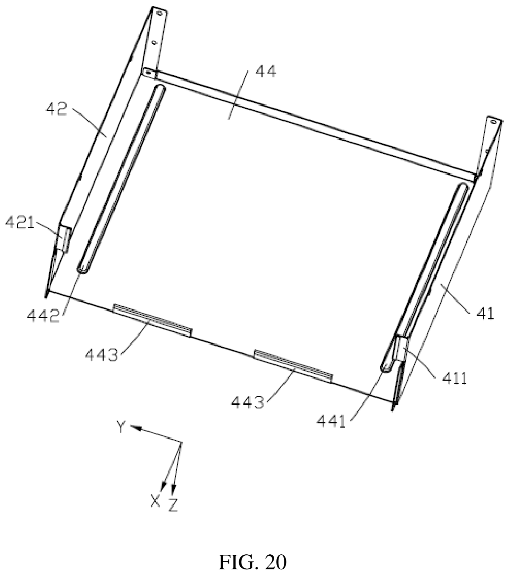

Referring to FIG. 1 and FIG. 20, in some embodiments, the bottom wall 44 is provided with a first limiting portion 441 and a second limiting portion 442, the first limiting portion 441 extending along the first direction X, and the second limiting portion 442 extending along the first direction X. The first limiting portion 441 and the second limiting portion 442 are arranged along the second direction Y. The first limiting portion 441 and the second limiting portion 442 protrude from the bottom wall 44 along a direction opposite to the third direction Z. When the bracket 12 is disposed in the casing 40, the bracket 12 is located between the first limiting portion 441 and the second limiting portion 442. When the cell 11 swells, the first limiting portion 441 and the second limiting portion 442 can restrict the movement of the bracket 12 along the second direction Y, which is conducive to the movement of the bracket 12 along the first direction X.

In some embodiments, the top wall 43 is provided with a third limiting portion 431 and a fourth limiting portion 432, the third limiting portion 431 extending along the first direction X, and the fourth limiting portion 432 extending along the first direction X. The third limiting portion 431 and the fourth limiting portion 432 are arranged along the second direction Y. The first limiting portion 441 and the third limiting portion 431 are disposed along the third direction Z, and the second limiting portion 442 and the fourth limiting portion 432 are disposed along the third direction Z. The third limiting portion 431 and the fourth limiting portion 432 protrude from a surface of the top wall 43 opposite the bottom wall 44 along the third direction Z. When the bracket 12 is disposed in the casing 40, the bracket 12 is located between the third limiting portion 431 and the fourth limiting portion 432. When the cell 11 swells, the third limiting portion 431 and the fourth limiting portion 432 can restrict the movement of the bracket 12 along the second direction Y, which is conducive to the movement of the bracket 12 along the first direction X.

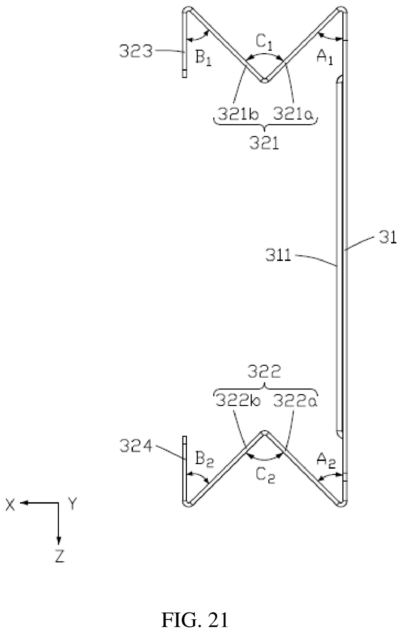

Referring to FIG. 2, FIG. 20, and FIG. 21, in some embodiments, the second member 30 includes a base portion 31 and a bent portion 32, the base portion 31 being connected to the bent portion 32, and the bent portion 32 being fixedly connected to the casing 40. The base portion 31 is configured to apply pressure to the cell unit 10. The bent portion 32 is configured to provide a swelling space for the cell unit 10.

In some embodiments, when the cell 11 does not swell, the second member 30 does not apply pressure to the cell unit 10. When the cell 11 swells, the cell 11 compresses the second member 30, and the second member 30 provides pressure to the cell 11.

In some embodiments, when the cell 11 does not swell, the second member 30 applies pressure to the cell 11. When the cell 11 swells, the cell 11 compresses the second member 30, and the second member 30 provides more pressure to the cell 11.

In some embodiments, the base portion 31 is connected to a body portion 111 of an outermost cell 11. The base portion 31 is provided with a plurality of bulges 311 spaced apart along the second direction Y, where the bulge 311 is formed by a side of the base portion 31 being recessed away from the body portion 111, the side of the base portion 31 being a side facing the body portion 111. This can enhance the structural strength of the base portion 31 and reduce the risk of deformation of the base portion 31 caused by non-uniform stress on the base portion 31.

In some embodiments, the bent portion 32 includes a first bent portion 321 and a second bent portion 322 arranged along the third direction Z. The first bent portion 321 is connected to one side of the base portion 31, and the second bent portion 322 is connected to the other side of the base portion 31. The first bent portion 321 and the second bent portion 322 act on the cell unit 10 through the base portion 31, and the first bent portion 321 and the second bent portion 322 can provide a swelling space for the cell unit 10. In another embodiment, the first bent portion 321 and the second bent portion 322 are arranged along the second direction Y.

In some embodiments, the second member 30 includes a first connection section 323, the first connection section 323 connecting a side of the first bent portion 321, the side of the first bent portion 321 being a side oriented away from the base portion 31, and the first connection section 323 being fixed to the casing 40. The first bent portion 321 is fixed to the casing 40 through the first connection section 323, which can transfer the force received by the bent portion 32 to the casing 40.

In some embodiments, the first connection section 323 is parallel to the base portion 31, which is conducive to deformation of the second member 30 in the first direction X.

In some embodiments, the second member 30 includes a second connection section 324, the second connection section 324 connecting a side of the second bent portion 322, the side of the second bent portion 322 being a side oriented away from the base portion 31, and the second connection section 324 being fixed to the casing 40. The second bent portion 322 is fixed to the casing 40 through the second connection section 324, which can transfer the force received by the bent portion 32 to the casing 40. For example, the second bent portion 322 is fixed to the casing 40 by welding, adhesion, abutment, clamping, or a screw.

In some embodiments, the second connection section 324 is parallel to the base portion 31, which is conducive to deformation of the second member 30 in the first direction X.

In some embodiments, the first sidewall 41 is provided with a first fixed portion 411. Along the first direction X, a projection of the first connection section 323 overlaps with a projection of the first fixed portion 411, and the first connection section 323 is fixed to the first fixed portion 411.

In some embodiments, the second sidewall 42 is provided with a second fixed portion 421. Along the first direction X, a projection of the first connection section 323 overlaps with a projection of the second fixed portion 421, and the first connection section 323 is fixed to the second fixed portion 421. For example, the first connection section 323 is fixed to the second fixed portion 421 by welding, adhesion, abutment, clamping, or a screw.

In some embodiments, the first fixed portion 411 is closer to the cell unit 10 than the first connection section 323, facilitating the fixation of the first fixed portion 411 and the first connection section 323.

In some embodiments, the second fixed portion 421 is closer to the cell unit 10 than the first connection section 323, facilitating the fixation of the second fixed portion 421 and the first connection section 323.

In some embodiments, a structural strength of the first sidewall 41 is greater than a structural strength of the second member 30, reducing the risk of deformation of the first sidewall 41 due to the force received by the first bent portion 321.

In some embodiments, a structural strength of the second sidewall 42 is greater than the structural strength of the second member 30, reducing the risk of deformation of the second sidewall 42 due to the force received by the first bent portion 321.

In some embodiments, a thickness of the first sidewall 41 is greater than a maximum thickness among the base portion 31, the first bent portion 321, and the first connection section 323, enhancing the structural strength of the first sidewall 41, and reducing the risk of deformation of the first sidewall 41 due to the force received by the first bent portion 321.

In some embodiments, a thickness of the second sidewall 42 is greater than the maximum thickness among the base portion 31, the first bent portion 321, and the first connection section 323, enhancing the structural strength of the second sidewall 42, and reducing the risk of deformation of the second sidewall 42 due to the force received by the first bent portion 321.

In some embodiments, the bottom wall 44 is provided with a third fixed portion 443. Along the first direction X, a projection of the second connection section 324 overlaps with a projection of the third fixed portion 443, and the second connection section 324 is fixed to the third fixed portion 443. Optionally, the bottom wall 44 is provided with a plurality of third fixed portions 443, the plurality of third fixed portions 443 being spaced apart along the second direction Y, and the second connection section 324 being fixed to the plurality of third fixed portions 443, which can enhance the connection strength between the second connection section 324 and the bottom wall 44. For example, the second connection section 324 is fixed to the third fixed portion 443 by welding, adhesion, abutment, clamping, or a screw.

In some embodiments, the third fixed portion 443 is closer to the cell unit 10 than the second connection section 324, facilitating the fixation of the third fixed portion 443 and the second connection section 324.

In some embodiments, a structural strength of the bottom wall 44 is greater than the structural strength of the second member 30, reducing the risk of deformation of the bottom wall 44 due to the force received by the first bent portion 321.

In some embodiments, a thickness of the bottom wall 44 is greater than a maximum thickness among the base portion 31, the second bent portion 322, and the second connection section 324, enhancing the structural strength of the bottom wall 44, and reducing the risk of deformation of the bottom wall 44 due to the force received by the second bent portion 322.

In some embodiments, the first bent portion 321 includes a first bent section 321a and a second bent section 321b, the first bent section 321a being connected to the base portion 31, and the second bent section 321b connecting the first bent section 321a and the first connection section 323. The first bent section 321a and the base portion 31 form a first included angle A₁, the second bent section 321b and the first connection section 323 form a second included angle B₁, and the first bent section 321a and the second bent section 321b form a third included angle C₁, where A₁ ≥ B₁, which is conducive to increasing the deformation resistance of the first bent section 321a, and reducing the risk of deformation of the second member 30 in the first direction X.

In some embodiments, C₁ > A₁, which is conducive to improving uniform deformation of the first bent portion 321.

In some embodiments, C₁ = 2B₁ = 2A₁, which is conducive to further improving uniformity of deformation of the first bent portion 321.

In some embodiments, the second bent portion 322 includes a third bent section 322a and a fourth bent section 322b, the third bent section 322a being connected to the base portion 31, and the fourth bent section 322b connecting the third bent section 322a and the second connection section 324. The third bent section 322a and the base portion 31 form a first included angle A₂, the fourth bent section 322b and the second connection section 324 form a second included angle B₂, and the third bent section 322a and the fourth bent section 322b form a third included angle C₂, where A₂ ≥ B₂, which is conducive to increasing the deformation resistance of the third bent section 322a, and reducing the risk of deformation of the second member 30 in the first direction X.

In some embodiments, C₂ > A₂, which is conducive to improving uniform deformation of the first bent portion 321.

In some embodiments, C₂ = 2B₂ = 2A₂, which is conducive to further improving uniformity of deformation of the first bent portion 321.

In some embodiments, the first bent portion 321 and the second bent portion 322 have the same structure, which is conducive to uniformity of stress and deformation.

Optionally, the second bent portion 322 is disposed at a same angle as the first bent portion 321. When the first bent portion 321 and the second bent portion 322 are subjected to force, they can be uniformly stressed and uniformly deformed, reducing the risk of rotation of the second member 30 due to uneven deformation. Optionally, A₁ = A₂, B₁ = B₂, and C₁ = C₂.

Referring to FIG. 1, in some embodiments, the battery module 100 includes a sampling wire 50, the sampling wire 50 being connected to any one of the electrode terminals 11c of two adjacent cells 11 that are bent and connected. The sampling wire 50 can collect one of voltage, current, and temperature of each cell 11.

Referring to FIG. 1, in some embodiments, the battery module 100 includes a circuit board 60, the circuit board 60 being disposed between the second member 30 and the front wall 45. The circuit board 60 is connected to the sampling wire 50 and can receive data collected by the sampling wire 50. The circuit board 60 includes a BMS (Battery Management System) assembly. The BMS assembly includes a plurality of electronic components, and the plurality of electronic components can implement functions such as control, protection, communication, electrical quantity calculation, signal transmission, and electrical energy transmission for the cells 11. Optionally, the circuit board 60 includes a flexible circuit board (FPC, Flexible Printed Circuit). Optionally, the circuit board 60 includes a printed circuit board (PCB, Printed Circuit Board), and the circuit board 60 is provided with a plurality of wires (not shown in the figure).

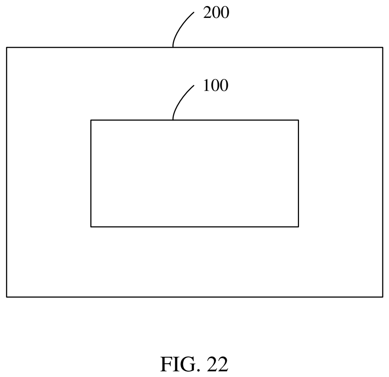

Referring to FIG. 22, this application further provides an electrical device 200 using the foregoing battery module 100. In an embodiment, the electrical device 200 in this application may be, but is not limited to, an electronic device, a drone, a backup power source, an electric vehicle, an electric motorcycle, an electric bicycle, an electric tool, or a large household battery module.

Those of ordinary skill in the art should appreciate that some foregoing embodiments are for description of this application only but not for limiting this application. Appropriate modifications and variations made to some foregoing embodiments without departing from the essential spirit and scope of this application all fall within the scope of this application.

## Claims

1. A battery module comprising:
a plurality of cell units arranged along a first direction, each of the cell units comprises a cell and a bracket; the cell comprises an electrode assembly, a cell housing, and an electrode terminal; and the electrode terminal is connected to the electrode assembly and led out of the cell housing;
the cell housing comprises a body portion and a first sealing portion, the electrode assembly is disposed in the body portion, the electrode terminal extends out of the cell housing from the first sealing portion, and the body portions of adjacent cells are in direct contact;
the cell housing comprises a first wall, a second wall, a third wall, and a fourth wall; wherein the first wall and the second wall are disposed opposite to each other along a second direction; along the first direction, the third wall is disposed opposite to the fourth wall; and the second direction is perpendicular to the first direction; and
the bracket comprises a first portion, the first portion covers at least a part of the first wall; and when viewed along the second direction, in the first direction, the first portion does not exceed the third wall, and the first portion does not exceed the fourth wall; and
the battery module further comprises a first member and a second member; along the first direction, the first member and the second member are located on two sides of the plurality of cell units, the first member is configured to restrict the cells from moving away from each other, and the second member is configured to restrict the cells from moving away from each other.

2. The battery module according to claim 1, wherein when viewed along the second direction, in the first direction, the first portion is located between the third wall and the fourth wall.

3. The battery module according to any one of claims 1 to 2, wherein the body portion of each of the cells is in a pressurized state.

4. The battery module according to any one of claims 1 to 3, wherein the cell unit comprises two brackets, the cell housing comprises two first sealing portions, the electrode terminal extends out of the cell housing from each of the two first sealing portions, and each of the first sealing portions is covered with the bracket.

5. The battery module according to any one of claims 1 to 4, wherein the second member is configured to apply pressure to the plurality of cell units and is configured to provide a swelling space for the plurality of cell units.

6. The battery module according to claim 5, wherein the battery module comprises a casing, and the cell units are disposed in the casing;
the second member comprises a base portion and a bent portion, the base portion is connected to the bent portion, and the bent portion is fixed to the housing; and
the base portion is configured to apply pressure to the cell units, and the bent portion is configured to provide a swelling space for the cell units.

7. The battery module according to claim 6, wherein the bent portion comprises a first bent portion and a second bent portion arranged along a third direction, the first bent portion is connected to one side of the base portion, and the second bent portion is connected to another side of the base portion; and
the first direction, the second direction, and the third direction are perpendicular to each other.

8. The battery module according to claim 7, wherein the second member comprises a first connection section, the first connection section is connected a side of the first bent portion, the side of the first bent portion being a side facing away from the base portion, and the first connection section is fixed to the casing.

9. The battery module according to claim 8, wherein the first bent portion comprises a first bent section and a second bent section, the first bent section connects the base portion and the second bent section, and the second bent section is connected to the first connection section.

10. The battery module according to any one of claims 8 to 9, wherein the first bent section and the base portion form a first included angle A₁, the second bent section and the first connection section form a second included angle B₁, and A₁ ≥ B₁.

11. The battery module according to claim 10, wherein the first bent section and the second bent section form a third included angle C₁, and C₁ > A₁.

12. The battery module according to claim 11, wherein C₁ = 2 A₁ = 2 B₁.

13. The battery module according to any one of claims 6 to 12, wherein the casing comprises a first sidewall, a second sidewall, a top wall, and a bottom wall, the first sidewall connects the top wall and the bottom wall, the second sidewall connects the top wall and the bottom wall, the first member, the casing, and the second member form an accommodation space, and the cell units are disposed in the accommodation space.

14. The battery module according to any one of claims 6 to 12, wherein the battery module comprises a front wall; the casing comprises a first sidewall, a second sidewall, a top wall, and a bottom wall; and the front wall connects the first sidewall, the second sidewall, the top wall, and the bottom wall;
the first member and the front wall are disposed along the first direction; the first member, the front wall, and the casing form an accommodation space; and
along the first direction, the second member is located between the plurality of cell units and the front wall, and the second member is located in the accommodation space.

15. The battery module according to any one of claims 1 to 14, wherein the first sealing portion comprises a first connection portion, a second connection portion, and a third connection portion; the second connection portion and the third connection portion are disposed opposite to each other along a third direction, and the second connection portion is connected to the third connection portion through the first connection portion; and
the bracket covers the second connection portion, the third connection portion, and at least a part of the first connection portion.

16. The battery module according to claim 15, wherein the bracket comprises a second portion, a first side portion, and a second side portion; the second portion covers at least a part of the first connection portion, the first side portion covers the second connection portion, and the second side portion covers the third connection portion.

17. The battery module according to claim 16, wherein when viewed along the second direction, in the first direction, the second portion is located between the third wall and the fourth wall.

18. The battery module according to claim 16 or 17, wherein when viewed along the second direction, in the first direction, the first side portion is located between the third wall and the fourth wall.

19. The battery module according to any one of claims 16 to 18, wherein when viewed along the second direction, in the first direction, the second side portion is located between the third wall and the fourth wall.

20. The battery module according to any one of claims 16 to 19, wherein when viewed along the first direction, in the second direction, a part of the first connection portion is located between the body portion and the first portion, and in the third direction, a part of the first connection portion is located between the first side portion and the second side portion.

21. The battery module according to any one of claims 16 to 20, wherein the electrode assembly is a wound structure; the electrode assembly comprises a first straight section, a second straight section, a first curved section, and a second curved section; wherein the first straight section connects the first curved section and the second curved section, and the second straight section connects the first curved section and the second curved section; and
along the first direction, a projection of the third wall covers a projection of the first straight section, and a projection of the fourth wall covers a projection of the second straight section.

22. The battery module according to claim 21, wherein along the second direction, a projection of the first side portion overlaps with a projection of the first curved section, the projection of the first side portion and a projection of the first straight section, are spaced apart from each other and the projection of the first side portion and a projection of the second straight section are spaced apart from each other.

23. The battery module according to claim 21, wherein along the second direction, a projection of the second side portion overlaps with a projection of the second curved section, the projection of the second side portion and a projection of the first straight section are spaced apart from each other, and the projection of the second side portion and a projection of the second straight section are spaced apart from each other.

24. The battery module according to any one of claims 16 to 23, wherein a second gap is formed between adjacent ones of the first side portions.

25. The battery module according to any one of claims 16 to 24, wherein a third gap is formed between adjacent ones of the second side portions.

26. The battery module according to any one of claims 16 to 25, wherein the bracket comprises a first extension portion, along the second direction, the first extension portion extends from the first side portion, the body portion comprises a fifth wall, and the first extension portion covers at least a part of the fifth wall.

27. The battery module according to claim 26, wherein the bracket comprises a third recess and a first protrusion, the first protrusion is disposed in the third recess of an adjacent bracket, and along the first direction, a fourth gap is provided between the first protrusion and the third recess.

28. The battery module according to any one of claims 1 to 27, wherein the bracket is integrally formed on the cell.

29. The battery module according to any one of claims 1 to 28, wherein the bracket is an insulating bracket.

30. The battery module according to any one of claims 6 to 14, wherein the casing comprises a first limiting portion and a second limiting portion, and along the second direction, the bracket is located between the first limiting portion and the second limiting portion.

31. An electrical device comprising the battery module according to any one of claims 1 to 30.
